# EUROPEAN PATENT SPECIFICATION

(11) **EP 1 839 620 B1**
(45) Date of publication and mention of the grant of the patent: **22.07.2009**
(21) Application number: 07105192.4
(22) Date of filing: 29.03.2007
(51) Int. Cl.: A61C 19/04

(54) **Auxiliary apparatus for dental treatments**
Zusatzgerät zur zahnärztlichen Behandlung
Appareil auxiliaire pour traitements dentaires

(30) Priority: 31.03.2006 IT BO20060233
(43) Date of publication of application: 03.10.2007
(73) Proprietor: CASTELLINI S.p.A., I-40013 Castel Maggiore (Bologna) (IT)
(72) Inventor: Castellini, Franco, 40124, Bologna (IT)
(74) Representative: Lanzoni, Luciano

(56) References cited:
- WO-A-20/05077298
- FR-A- 2 741 524
- US-A- 5 295 833
- US-A- 5 902 105

## Description

This invention relates to an auxiliary apparatus for dental treatments where the operating parameters of the handpieces applied can be displayed.

It is well known that dental surgeries use auxiliary apparatus (also referred to as "stand-alone" apparatus because it is separate from the traditional dental unit) to administer dental treatment on patients using specific handpieces that may supplement or be used instead of the handpieces and equipment located on the dental unit.

The most common treatments include cleaning of tooth surfaces using a vibratory handpiece or scaler, but also endodontic or implant surgery. These specific treatments are performed using the auxiliary apparatus, which essentially comprises:
- a main body constituting the power unit that drives the handpieces in turn connected to the unit through a tube;
- means for activating the handpiece and adjusting its operating parameters, these means being located on a surface of the main body and being controlled by
- a microprocessor unit for controlling the main and auxiliary functions of the handpiece applied to the apparatus.

The microprocessor may, in complex configurations, be programmed and set for a plurality of handpieces and treatments according to operating needs.

One of the needs which current dental apparatus of this kind is required to satisfy is that of preparing root canals of teeth to be devitalized or treated root canals to be subjected to restorative treatment using the above mentioned vibratory handpiece.

In short, the scaler handpiece may be fitted with a customary tip known as a "file" (usually made of nickel-titanium and having a mainly conical shape and a rough surface used for removing material) coupled to the handpiece using appropriate clamp-like fittings on the handpiece and on the file.

The file, which varies in helix angle and pitch according to the type of root canal, uses the vibrations generated by the handpiece and the cavitation of the fluid either flowing through the handpiece itself or injected by the dental surgeon using a syringe to clean and remove material from the canal.

The prior art described above is certainly effective but puts the dental surgeons who use it in a critical working situation since the stand-alone apparatuses do not at present have any form of apical detection system, that is to say, no way of detecting the position of the file tip relative to the apical portion at the bottom end of the root canal to be treated and that means the only way of checking that the canal has been completely and correctly cleaned out is by an X-ray examination.

The Applicant, ever aware of the technical and practical requirements of dental surgeries, has designed and made an auxiliary apparatus for dental treatments featuring a system for detecting the position, relative to the apex, of the scaler handpiece tip inside the root canal being treated, thus making the dentist's task easier in this particular situation.

An example of such auxiliary device is shown in document FR 2 741 524.

In accordance with the invention, this aim is achieved by an auxiliary apparatus, especially an auxiliary apparatus for dental treatments, having the technical characteristics described in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows an auxiliary apparatus for dental treatments according to the present invention in a schematic perspective view with some parts cut away to better illustrate others;
- Figure 2 is a diagram illustrating some of the parts of the apparatus of Figure 1;
- Figure 3 is a side view illustrating a part of a vibratory handpiece to which a filing tool is applied.

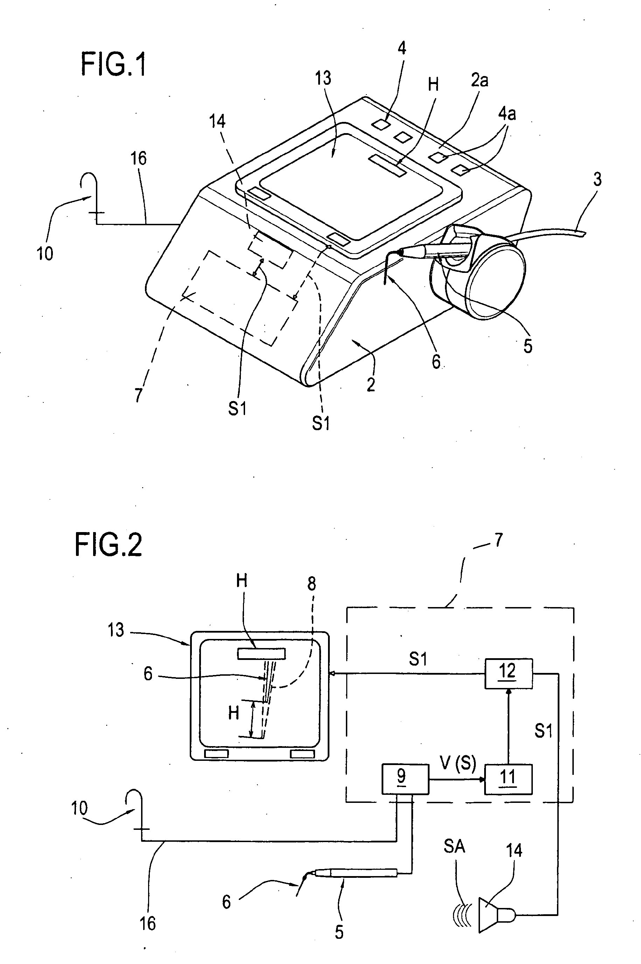

With reference to the accompanying drawings, in particular Figure 1, the auxiliary apparatus for dental treatments according to the invention is labelled 1 in its entirety and comprises, insofar as is relevant to the present invention:
- a main body 2 (for example, shaped substantially like a parallelepiped, but without thereby restricting the scope of the invention) constituting a power unit that drives handpieces used for traditional conservative, implant and/or endodontic operations and in turn connected to the unit 2 through a connecting tube 3 (equipped with an appropriate end fitting), including a handpiece 5 adapted to impart sonic or ultrasonic vibrations;
- means 4 for activating the handpiece 5 and adjusting the operating parameters of the handpiece 5, said means (for example pushbuttons 4a) being located on a surface 2a of the main body 2 and being controlled by
- a microprocessor unit 7 (illustrated as a block in the drawings) for controlling the main and auxiliary functions of the handpiece 5 applied to the unit 2.

Depending on the type of treatment, the handpieces applicable to the apparatus 1 may be of several different kinds, such as, for example, handpiece burs for implant surgery.

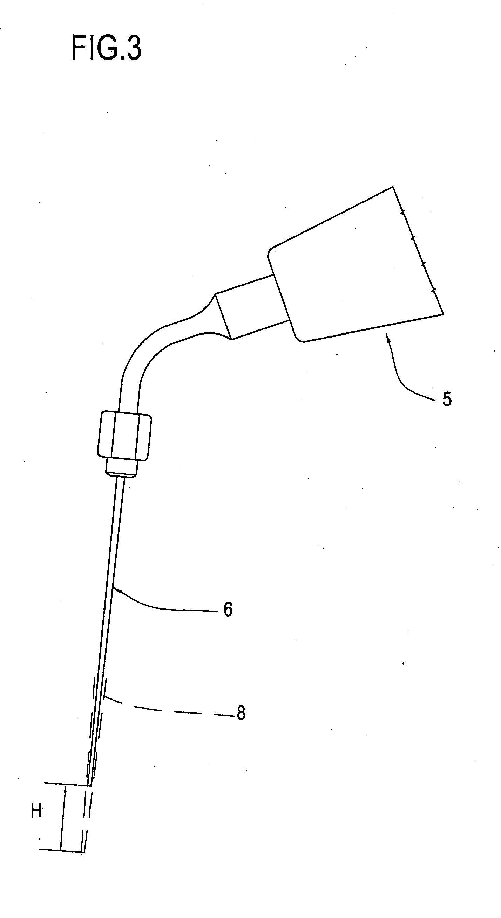

The vibratory handpiece 5 present in this case is usually used with another tip for cleaning tooth surfaces but, in this specification, is fitted with the file tip 6 for the odontological treatment of the root canals 8 (see Figure 3 in particular).

Obviously, the apparatus according to the invention may include additional auxiliary components without thereby restricting the scope of the invention.

As shown in Figures 1 and 2, the apparatus 1 also comprises:
- a unit 9 for measuring a given value V of an electrical quantity generated, in combination, by a first pole (in this case, purely by way of example, the negative pole) defined by the file tip 6 applied to the vibratory handpiece 5 and positioned in the root canal 8, and a second pole (the positive pole) defined by a reference element 10 positioned in the oral cavity (usually connected to the patient's lip) and connected at the other end to the apparatus 1;
- a unit 11 for processing a respective signal S sent by the measuring unit 9 as a function of the value V of the electrical quantity in such a way as to transduce the signal S into a value H corresponding to the distance between the tip 6 and the apex of the root canal 8;
- means 12 for detecting the distance value H, connected to the processing unit 11 and designed to at least issue a proportional audio/video reference signal S1 as a function of the distance H between the tip 6 and the apex of the root canal 8.

As shown in Figures 1 and 2, the apparatus 1 according to the invention may be provided with a data display screen 13.

In this case, the screen 13 may be connected to the means 12 for detecting the distance value H so as to display the value H in alphanumeric form. Preferably, but without limiting the scope of the invention, the distance value H can be displayed as a number expressed in millimetres.

Similarly, the apparatus 1 may also comprise a sound emitting unit 14 connected to the detecting means 12 so as to emit an audible signal SA proportional to the distance value H reached by the tip 6.

Further, since there is a microprocessor unit 7 to coordinate the multiplicity of units present, the unit 9 for measuring the value V of the electrical quantity and the processing unit 11 may also be connected directly to the microprocessor unit 7.

The unit 7 may also directly control the detecting means 12 and coordinate the transmission of the signals S1 to the screen 13 and/or to the sound emitting unit 14.

By way of example, without limiting the scope of the invention, the measuring unit 9 may measure an electrical impedance.

As shown in Figures 1 and 2, the above mentioned reference element may be composed of a metal hook 10 fitted with a connecting cable 16 applicable directly to the main body 2 of the apparatus and connected electrically to the above mentioned unit 9 for measuring the impedance value.

The means 12 for detecting the distance value H emits the audio/video signal S1 upon deactivation of the vibratory handpiece 5 in order to check the position when work is not being done.

For alerting the dentist immediately when the tip 6 is near the root canal apex, the sound emitting unit 14 may be programmed to emit the audible signal SA when the tip 6 reaches a predetermined distance H from the apex at the bottom of the root canal 8. The signal SA may differ in tone according to how close or far the apex of the canal 8 is.

An apparatus made in this way thus achieves the aim of providing a display and alerting system for controlling the position of the tip applied to the vibratory handpiece during root canal treatment.

The addition of this function is extremely useful for the dentist while having a relatively low impact, in terms of cost and space, on the existing structure and functions of the apparatus: in this way, the range of operating capabilities of the apparatus is further extended and enhanced.

The invention described is susceptible of industrial application and may be modified and adapted in several ways without thereby departing from the scope of the claims.

## Claims

1. An auxiliary apparatus for dental treatments comprising at least:
- a main body (2) constituting a power unit that drives handpieces used for traditional conservative, implant and/or endodontic operations and in turn connected to the unit (2) through a connecting tube (3), including a handpiece (5) adapted to impart sonic or ultrasonic vibrations to a file tip (6) applicable to the handpiece (5) and used for treating root canals (8);
- handpiece (5) activation and adjustment means (4) located on.a surface (2a) of the main body (2) and being controlled by
- a microprocessor unit (7) for controlling the main and auxiliary functions of the handpiece (5) applied to the unit (2); the apparatus (1) further comprising :
- a unit (9) for measuring a given value (V) of an electrical quantity generated, in combination, by a first pole defined by the file tip (6) applied to the vibratory handpiece (5) and positioned in the root canal (8), and a second pole defined by a reference element (10) positioned in the oral cavity and connected at the other end to the main body (2);
- a unit (11) for processing a respective signal (S) sent by the measuring unit (9) as a function of the value (V) of the electrical quantity in such a way as to transduce the signal (S) into a value (H) corresponding to the distance between the tip (6) and the apex of the root canal (8);
- means (12) for detecting the distance value (H), connected to the processing unit (11) and designed to at least issue a proportional audio/video reference signal (S1) as a function of the distance (H) between the tip (6) and the root canal apex; the apparatus (1) being **characterised in that** the means (12) for detecting the distance value (H) emit the signal (S1) upon deactivation of the vibratory handpiece (5).

2. The apparatus according to claim 1, **characterised in that** it comprises a data display screen (13) associated with the apparatus (1); the screen (13) being connected to the means (12) for detecting the distance value (H) so as to display the value (H) in alphanumeric form.

3. The apparatus according to claim 1, **characterised in that** it comprises a sound emitting unit (14) associated with the apparatus (1) and connected to the detecting means (12) to emit an audible signal (SA) proportional to the distance value (H) reached by the tip (6).

4. The apparatus according to claims 1 to. 3, **characterised in that** the unit (9) for measuring the value (V) of the electrical quantity and.the processing unit (11) are connected to the microprocessor unit (7); the microprocessor unit (7) also controlling the detecting means (12).

5. The apparatus according to claim 1, **characterised in that** the measuring unit (9) measures an electrical impedance.

6. The apparatus according to claim 1, **characterised in that** the reference element is composed of a metal hook (10) fitted with a connecting cable (16) applicable to the main body of the apparatus and connected to the measuring unit (9).

7. The apparatus according to claims 1 and 3,
**characterised in that** the sound emitting unit (14) is programmed to emit the audible signal (SA) when the tip (6) reaches a predetermined distance (H) from the apex at the bottom of the root canal (8).

8. The apparatus according to claims 1 and 2,
**characterised in that** the screen (13) displays the distance value (H) as a number expressed in millimetres.

## Patentansprüche

1. Zusatzgerät zur zahnärztlichen Behandlung, das zumindest Folgendes beinhaltet:
- ein Hauptgehäuse (2), das eine Versorgungseinheit zum Antrieb von Handstücken bildet, die für zahnärztliche Behandlungen herkömmlicher konservativer Art, für Implantate und/oder für die endodontische Chirurgie verwendet werden und ihrerseits mit der Einheit (2) über einen Anschlussschlauch (3) verbunden sind, wobei ein Handstück (5) beinhaltet ist, das dafür ausgelegt ist, Schall- oder Ultraschallschwingungen auf eine Feilenspitze (6) zu übertragen, die an dem Handstück (5) angebracht werden kann und zur Behandlung von Wurzelkanälen (8) verwendet wird;
- Mittel (4) zur Aktivierung und Einstellung der Handstücke (5), die auf einer Fläche (2a) des Hauptgehäuses (2) angeordnet sind und gesteuert werden über
- eine Mikroprozessoreinheit (7) zur Steuerung der Haupt- und Zusatzfunktionen des Handstücks (5), das mit der Einheit (2) verbunden ist;
wobei das Gerät (1) ferner beinhaltet:
- eine Einheit (9) zum Messen eines gegebenen Wertes (V) einer elektrischen Größe, die in Kombination erzeugt wird durch einen ersten Pol, der durch die am vibrierenden Handstück (5) angebrachte und in den Wurzelkanal (8) eingeführte Feilenspitze (6) gebildet wird, und einem zweiten Pol, der durch ein Referenzelement (10) gebildet wird, das in der Mundhöhle angeordnet und am anderen Ende mit dem Hauptgehäuse (2) verbunden ist;
- eine Einheit (11) zur Verarbeitung eines entsprechenden Signals (S), das von der Messeinheit (9) als Funktion des Wertes (V) der elektrischen Größe ausgesendet wird, um das Signal (S) ein einen Wert (H) umzuwandeln, der dem Abstand zwischen der Spitze (6) und dem Apex des Wurzelkanals (8) entspricht;
- Mittel (12) zur Erfassung des Abstandswertes (H), die an die Verarbeitungseinheit (11) angeschlossen und dafür ausgelegt sind, zumindest ein proportionales Audio/Video-Referenzsignal (S1) als Funktion des Abstandes (H) zwischen der Spitze (6) und dem Apex des Wurzelkanals auszugeben; wobei das Gerät (1) **dadurch gekennzeichnet ist, dass** die Mittel (12) zur Erfassung des Abstandswertes (H) das Signal (S1) bei Deaktivierung des vibrierenden Handstücks (5) ausgeben.

2. Gerät nach Anspruch 1, **dadurch gekennzeichnet, dass** es einen Datenanzeige-Bildschirm (13) beinhaltet, der mit dem Gerät (1) verbunden ist; wobei der Bildschirm (13) an die Mittel (12) zur Erfassung des Abstandswertes (H) angeschlossen ist, um den Wert (H) im alphanumerischen Format anzuzeigen.

3. Gerät nach Anspruch 1, **dadurch gekennzeichnet, dass** es eine Klangausgabeeinheit (14) beinhaltet, die mit dem Gerät (1) verbunden und an die Erfassungsmittel (12) angeschlossen ist, um ein hörbares Signal (SA) auszugeben, das proportional zu dem von der Spitze (6) erreichten Abstandswert (H) ist.

4. Gerät nach den Ansprüchen 1 bis 3, **dadurch gekennzeichnet, dass** die Einheit (9) zum Messen des Wertes (V) der elektrischen Größe und die Verarbeitungseinheit (11) an die Mikroprozessoreinheit (7) angeschlossen sind; wobei die Mikroprozessoreinheit (7) auch die Erfassungsmittel (12) steuert.

5. Gerät nach Anspruch 1, **dadurch gekennzeichnet, dass** die Messeinheit (9) einen elektrischen Widerstand misst.

6. Gerät nach Anspruch 1, **dadurch gekennzeichnet, dass** das Referenzelement aus einem Metallhaken (10) besteht, der mit einem Anschlusskabel (16) versehen ist, das mit dem Hauptgehäuse des Gerätes verbunden und an die Messeinheit (9) angeschlossen werden kann.

7. Gerät nach den Ansprüchen 1 und 3, **dadurch gekennzeichnet, dass** die Klangausgabeeinheit (14) so programmiert ist, dass sie ein hörbares Signal (SA) ausgibt, wenn die Spitze (6) einen vorbestimmten Abstand (H) vom Apex am Ende des Wurzelkanals (8) erreicht.

8. Gerät nach den Ansprüchen 1 und 2, **dadurch gekennzeichnet, dass** der Bildschirm (13) den Abstandswert (H) als eine in Millimetern ausgedrückte Zahl anzeigt.

## Revendications

1. Un appareil auxiliaire pour traitements dentaires comprenant au moins :
- un corps principal (2) constituant une unité d'alimentation qui entraîne des pièces à main utilisées pour des opérations conservatrices traditionnelles, des implants et/ou des opérations endodontiques et reliées, tour à tour, à l'unité (2) par l'intermédiaire d'un cordon (3) de branchement, comprenant une pièce à main (5) destinée à imprimer des vibrations soniques ou ultrasoniques à une pointe de lime (6) pouvant être associée à la pièce à main (5) et utilisée pour le traitement de canaux radiculaires (8) ;
- des moyens (4) d'activation et de réglage de la pièce à main (5), situés sur une surface (2a) du corps principal (2) et asservis à
- une unité à microprocesseur (7) servant à commander les fonctions principales et auxiliaires de la pièce à main (5) appliquée à l'unité (2) ; l'appareil (1) comprenant en outre :
- une unité (9) servant à mesurer une valeur donnée (V) d'une quantité électrique générée, en combinaison, par un premier pôle défini par la pointe de lime (6) associée à la pièce à main (5) vibrante et positionnée dans le canal radiculaire (8), et un deuxième pôle défini par un élément de référence (10) placé dans la cavité orale et relié, à l'autre extrémité, au corps principal (2) ;
- une unité (11) servant à traiter un signal (S) respectif envoyé par l'unité de mesure (9) en tant que fonction de la valeur (V) de la quantité électrique, de manière à convertir ledit signal (S) en une valeur (H) correspondant à la distance entre la pointe (6) et l'apex du canal radiculaire (8) ;
- des moyens (12) servant à détecter la valeur de distance (H), reliés à l'unité de traitement (11) et destinés au moins à émettre un signal de référence audio/vidéo (S1) proportionnel en fonction de la distance (H) entre la pointe (6) et l'apex du canal radiculaire ; l'appareil (1) étant **caractérisé en ce que** les moyens (12) de détection de la valeur de distance (H) émettent le signal (S1) lors de la désactivation de la pièce à main (5) vibrante.

2. L'appareil selon la revendication 1, **caractérisé en ce qu'**il comprend un écran (13) d'affichage de données, associé à l'appareil (1) ; l'écran (13) étant relié aux moyens (12) de détection de la valeur de distance (H) de manière à afficher la valeur (H) sous une forme alphanumérique.

3. L'appareil selon la revendication 1, **caractérisé en ce qu'**il comprend une unité (14) d'émission sonore, associée à l'appareil (1) et reliée aux moyens de détection (12) pour émettre un signal audible (SA) proportionnel à la valeur de distance (H) atteinte par la pointe (6).

4. L'appareil selon les revendications de 1 à 3,
**caractérisé en ce que** l'unité (9) de mesure de la valeur (V) de la quantité électrique et l'unité de traitement (11) sont reliées à l'unité à microprocesseur (7) ; l'unité à microprocesseur (7) commandant aussi les moyens de détection (12).

5. L'appareil selon la revendication 1, **caractérisé en ce que** l'unité de mesure (9) mesure une impédance électrique.

6. L'appareil selon la revendication 1, **caractérisé en ce que** l'élément de référence se compose d'un crochet métallique (10) muni d'un câble de connexion (16) pouvant être associé au corps principal de l'appareil et relié à l'unité de mesure (9).

7. L'appareil selon les revendications 1 et 3,
**caractérisé en ce que** l'unité (14) d'émission sonore est programmée pour émettre le signal audible (SA) lorsque la pointe (6) atteint une distance prédéfinie (H) par rapport à l'apex au fond du canal radiculaire (8).

8. L'appareil selon les revendications 1 et 2,
**caractérisé en ce que** l'écran (13) affiche la valeur de distance (H) sous la forme d'un chiffre exprimé en millimètres.
